# EUROPEAN PATENT APPLICATION

(11) **EP 1 008 795 A1**
(43) Date of publication of application: **14.06.2000**
(21) Application number: 99121659.9
(22) Date of filing: 02.11.1999
(51) Int. Cl.: F16L 21/03

(54) **A sealing device**

(30) Priority: 07.12.1998 SE 9804246
(71) Applicant: Forsheda AB, S-330 12 Forsheda (SE)
(72) Inventor: Ingvarsson, Magnus, 561 43 Huskvarna (SE)
(74) Representative: Linde, Leif

(57) **Abstract**

A sealing device for sealing an annular space between two pipe end portions, a socket (38) and a spigot end (40), comprises a sealing ring (4) having a sealing portion (6) and a mould ring (8) provided with hollow spaces (10; 42; 48). The sealing device is moulded into the socket (38) at a cylindrical inner surface thereof and the sealing ring is positioned adjacent the free end of the socket. At least the hollow spaces (10) which are positioned closest to the sealing ring are separated from each other by means of a partition (14) extending axially and radially obliquely inwards into the socket (38).

## Description

The present invention relates to a sealing device for sealing an annular space between two pipe end portions, preferably consisting of concrete, one of the pipe end portions forming a socket having a substantially cylindrical inner surface and the other pipe end portion forming a spigot end introducable into the socket in the axial direction and having a substantially cylindrical outer surface.

The sealing device according to the invention is of the kind comprising a sealing ring consisting of an elastic material, preferably rubber, and having a sealing portion for sealing the annular space and a mould ring connected with the sealing ring and provided with hollow spaces. The sealing device is moulded into the socket at the inner cylindrical surface thereof with the sealing ring positioned adjacent the free end of the socket and the mould ring positioned axially inside the sealing ring.

It is desirable that the mould ring is at least in connection with the sealing portion of the sealing ring easily compressable so as to be able to take up the deformation of the sealing portion when the spigot end is introduced into the socket and also for taking up an angular position of the spigot end. It is also desirable that the mould ring shall provide a stable mould element when the mould ring is moulded into the socket as the sealing ring will otherwise being provided with an erroneous moulded-in position in the socket. Previously known sealing devices present unsatisfactory characteristics with regard to the opposite wishes stated above.

The object of the invention is to provide a sealing device of the kind stated in which said objects are satisfied in a more reliable way than in previously known sealing devices.

In order to comply with this object the sealing device according to the invention is characterized in that at least the hollow spaces positioned adjacent the sealing ring are separated from each other by means of a partition which extends axially and radially obliquely inwards into the socket. This design of the partition provides for the required deformation of the mould ring when the spigot end is introduced into the socket while there is at the same time provided for sufficient dimensional stability of the sealing device when the sealing device is moulded into the socket for providing a correct position of the sealing device in the socket.

In a preferred embodiment of the invention all hollow spaces provided in the section of the mould ring which is intended to engage with the cylindrical outer surface of the spigot end are separated from each other by means of partitions which extend axially and radially obliquely inwards into the socket. Preferably the hollow spaces are in respect of an axial section through the sealing device of elliptic shape with the long axis positioned so that it extends axially and radially obliquely inwards into the socket.

In order to make sure that the sealing device is provided with such a dimensional stability that it maintains its shape when being moulded into the socket it is suitable that the partitions constitute in radial direction a continuous portion extending between the radially outer surface and the radially inner surface of the mould ring. Thus, it is in this embodiment of the sealing device according to the invention possible to provide a radially extending section which everywhere is positioned in the partition.

It is suitable that the sealing device according to the invention is at its radially outer surface which is moulded into the socket provided with means for preventing or restricting axial displacement of the sealing device and the parts thereof, for example because of the fact that the sealing device is subjected to a radial compression. This provides for an increased capacity of the sealing device for maintaining the concentric position between socket and spigot end when the sealing device is subjected to transversely directed forces. Said means for preventing or restricting axial displacement of the sealing device and the parts thereof are suitably positioned at the radially outer surface of the sealing device in connection with the transition between the sealing ring and the mould ring and/or at the radially outer surface of the mould ring. Said means can be constituted by recesses in the radially outer surface of the sealing device, said recesses being filled by means of the material constituting the socket. Preferably the recesses have the form of one or several peripherally extending grooves, the grooves having in connection with the transition between the sealing ring and the mould ring a triangular cross-section and are at the radially outer surface of the mould ring constituted by grooves which in pairs define a peripherally extending bead having a dovetail shaped cross-section.

Preferably the radially outer surface of the sealing device is positioned in a cylindrical plane, i.e. without portions extending outside this plane. This feature of the sealing device facilitates the manufacturing of the sealing device by the fact that the sealing device can be manufactured in the form of continuous beads which at the vulcanization can rest on said flat surface.

Preferably the sealing device has at its edge portions retainer portions moulded into the material of the socket.

In a preferred embodiment of the sealing device according to the invention the mould ring has at its inner edge portion positioned at a distance from the sealing ring a radially inwards extending portion which at least partially constitutes the annular bottom surface of the socket. The radially inwards extending portion can be provided with one or several hollow spaces.

Different embodiments of the sealing device according to the invention shall be described in the following with reference to the accompanying drawings.
Fig. 1 shows an axial section of an embodiment of a sealing device according to the invention in which the sealing device is positioned in a mould for moulding a concrete pipe at which the sealing device is moulded into the socket of the concrete pipe.
Fig. 2 is an axial section of the sealing device according to Fig. 1 moulded into a concrete pipe socket and a spigot end included into a concrete pipe, adapted to be introduced into the socket for constituting a pipe joint.
Figs. 3 - 5 are axial sections of different embodiments of sealing devices according to the invention.

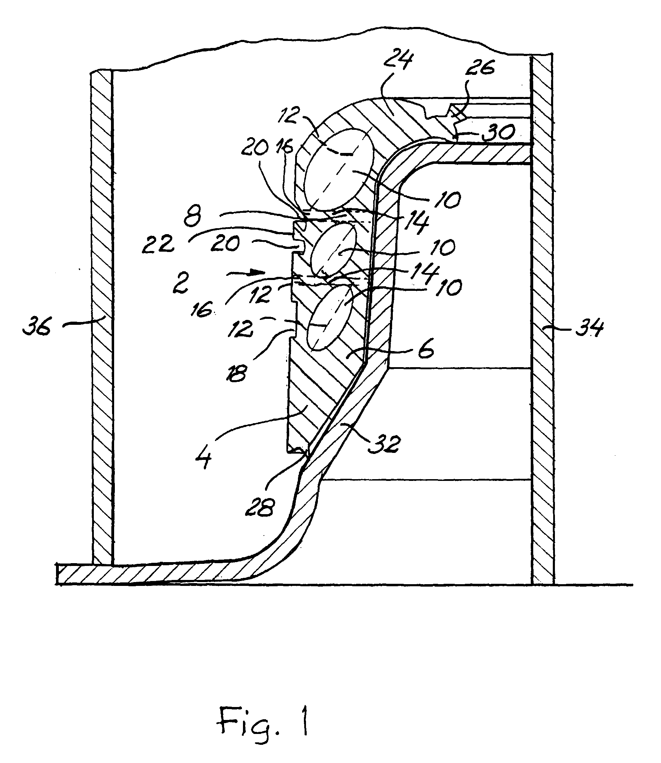

The sealing device 2 according to the invention shown in axial section in Fig. 1 consists of elastic material, preferably rubber, and is formed in a single part. The sealing device 2 comprises a sealing ring 4 having a sealing portion 6 and includes also a mould ring 8. The mould ring 8 is provided with annular hollow spaces 10 which in axial section are of elliptic shape with the major axes 12 of the ellipses extending axially and radially obliquely inwards - upwards in the figure. Said orientation of the elliptic hollow spaces 10 provide that the partitions 14 between the hollow spaces extend axially and radially obliquely inwards into the socket into which the sealing device shall be moulded. Because of this design of the partitions 14 the mould ring is easily compressible so as to take up the deformation of the sealing portion 6 and the angular position of the spigot end when the spigot end is introduced into the socket into which the sealing device has been moulded.

In spite of its capacity of taking up the deformation of the sealing portion and the angular position of the spigot end the mould ring constitutes a stable mould element so that there is provided a correct moulded-in position of the sealing device in the socket. The fact that the partitions 14 constitute in radial direction a continuous portion 16 shown by means of broken lines and extending between the radially outer and radially inner surface of the mould ring contributes to the stability of the mould ring. Thus, the radially continuous portions 16 of the partitions 14 constitute support elements in radial direction which prevent radial compression of the mould ring when the concrete is moulded into the mould while the concrete pipe is moulded and the sealing device is moulded into the socket thereof.

In connection with the transition section between the sealing ring 4 and the mould ring 8 the sealing device 2 has at its radially outer surface a peripherally extending groove 18. When the sealing device is moulded into the concrete, the concrete will fill up the groove 18 which provides for a fixation of the sealing device and the parts thereof in the axial direction. This prevents the sealing ring 4 from expanding in the axial direction when the sealing ring 4 is subjected to radially directed forces as a consequence of transverse loads at the joint formed by the socket into which the sealing device is moulded and a spigot end introduced into the socket. At its radially outer surface the mould ring 8 has two peripherally extending grooves 20 forming between themselves a peripherally extending bead 22 having a dovetail-shaped section. The grooves 20 and the bead 22 provide for an axial as well as a radial anchorage of the mould ring 8 in the concrete material of the socket.

The mould ring 8 has at its inner edge portion positioned at a distance from the sealing ring 4 a radially inwards directed portion 24 which subsequently to the moulding of the sealing device into the socket will partially form the annular bottom surface of the socket. The radially inwards directed portion 24 has a retainer bead 26 of dovetail-shaped cross-section.

At its axially outer edge portion the sealing device 2 has a peripherally extending sealing lip 28 and has at its axially inner, peripherally extending edge portion a sealing lip 30. The sealing lips 28 and 30 have the object of preventing concrete sludge and the like from entering into the space between the sealing device 2 and the mould surface on which the sealing device is tensioned when it shall be moulded into the pipe socket.

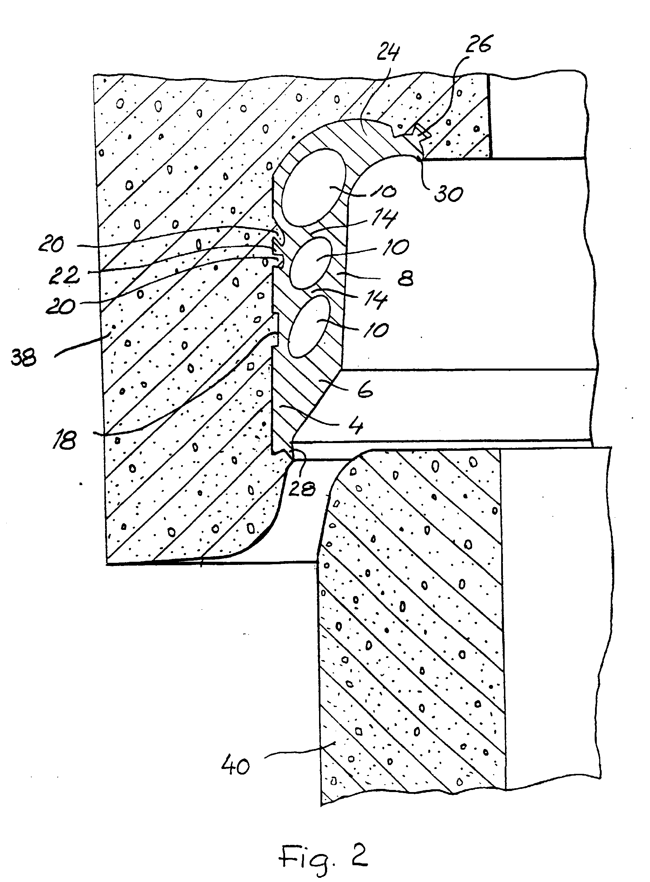

In fig. 1 there is shown also a part of the mould for manufacturing the concrete pipe, the concrete pipe comprising a socket into which the sealing device according to the invention is moulded. The mould comprises a base ring 32, a pipe-shaped core 34 and an outer mould 36. The sealing device 2 according to the invention is tensioned onto the outer surface of the base ring 32, and the sealing lips 28 and 30 of the sealing device 2 engage the outer surface of the base ring for preventing that concrete sludge and the like enters the space between the sealing device 2 and the base ring 32 during the moulding operation. When the mould is filled up with the concrete mixture the sealing device 2 is moulded into the socket in a well defined position at the inner surface of the socket. After the demoulding the sealing device 2 is moulded into the socket 38 in the position shown in Fig 2. In Fig. 2 there is shown also a spigot end 40 of another concrete pipe which shall be connected with the socket 38 for constituting a pipe joint. When the spigot end 40 is introduced into the socket 38 the outer surface of the spigot end will engage the sealing portion 6 of the sealing ring 4, the sealing portion 6 being thereby deformed axially inwards and radially outwards in the socket under the influence of the adjacent portion of the mould ring 8. As a consequence of the design of the partitions 14 between the hollow spaces 10 as described above the sealing portion of the sealing ring will without problems be taken up as a consequence of the deformation of the mould ring. Thus, in the sealing device according to the invention the mould ring will be deformed in a correct way in spite of the fact that it has sufficient dimensional stability for providing that the sealing device is moulded into the socket in a correct position.
When the spigot end 40 is introduced into the socket 38, the sealing portion 4 of the sealing device 2 is subjected to a radial compression. Because of the fact that the groove 18 is arranged at the transition between the sealing ring 4 and the mould ring, the sealing ring 4 is prevented from expanding in the axial direction. Such an expansion of the sealing ring 4 in the axial direction could lead to a substantially decreased sealing force of the sealing portion 6 of the sealing ring 4. Such an axial expansion could also lead to an eccentric position between the socket and the spigot end at transverse loads which would in turn jeopardize the sealing of the space between the socket 38 and the spigot end 40.

The mould ring 8 is in an efficient way fixed in the socket 38 by means of the grooves 20, the bead 22 and the retainer portion 26. Also when the mould ring 8 is subjected to an influence from the sealing ring 4 and from the spigot end 40 introduced into the socket 38 the mould ring 8 will retain its correct position in the socket.

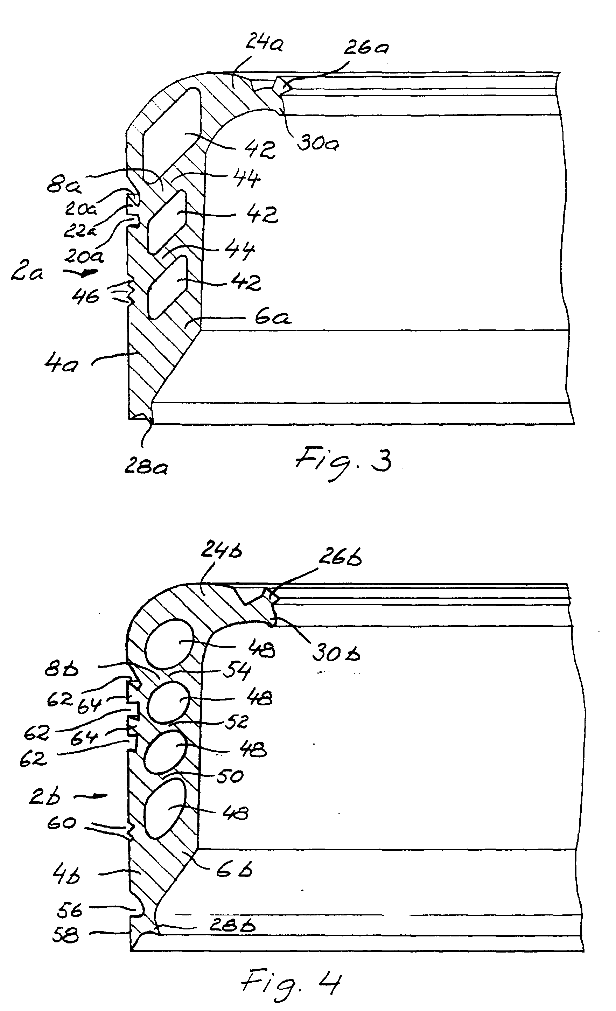

Like the sealing device according to Figs. 1 and 2 the sealing device 2 according to the invention shown in Fig. 3 consists of a sealing ring 4a having a sealing portion 6a and a mould ring 8a. In the embodiment according to Fig. 3 the hollow spaces 42 in the mould ring 8a are in axial section of rhomboid shape which provides that the partitions 44 between the hollow spaces 42 have substantially uniform width. The partitions 44 extend in the same way as in the sealing device 2 according to Figs. 1 and 2 obliquely axially and radially inwards into the socket so that the mould ring is provided with a good capacity of taking up the deformation of the sealing ring 4a.

In the embodiment according to Fig. 3 the means for preventing or restricting axial expansion of the sealing ring 4a consist of several peripherally extending grooves 46 of triangular cross-section.

For the rest the sealing device according to Fig. 3 is designed in the same way as the sealing device 2 according to Figs. 1 and 2 for which reason corresponding parts of the sealing device 2a according to Fig. 3 have the same reference numerals as the sealing device 2 according to Figs. 1 and 2 with the addition a.

The embodiment of the sealing device 2b according to the invention shown in Fig. 4 comprises a sealing ring 4b having a sealing portion 6b and a mould ring 8b. The mould ring 8b has four hollow spaces 48 between which partitions 50, 52 and 54 are provided. The partitions 50, 52 and 54 extend obliquely axially and radially inwards into the socket into which the sealing device 2b shall be moulded, the design according to Fig. 4 being such that the partition 50, i.e. the partition which is positioned closest to the sealing ring 4b, is the most oblique in relation to a radial plane through the sealing ring, while the partition 52 has somewhat less oblique position in relation to the radial plane and the partition 54 has even less oblique position in relation to the radial plane. This means that the mould ring 8b is easiest to deform in connection with the sealing ring 4b where the capacity of deformation is of greatest importance, and has a larger resistance against deformation under influence of the concrete when the sealing ring is moulded into the socket at a distance from the sealing ring 4b, i.e. at its central portion. The sealing ring 4b has at its free, forward edge a peripherally extending groove 56 defining a retainer portion 58 providing for an efficient anchorage of the forward end of the sealing device in the concrete material. The means for preventing axial displacement of the sealing ring 4b are constituted by two peripherally extending grooves 60 having triangular cross-sections, while the retainer portion of the mould ring 8b is constituted by three peripherally extending grooves 62 defining between themselves beads 64 having dovetail-shaped cross-sections. For the rest the sealing device 2b is designed in substantially the same way as the sealing devices according to Figs. 1, 2 and 3 for which reason corresponding portions are provided with the same reference numerals as in these figures with the addition of b.

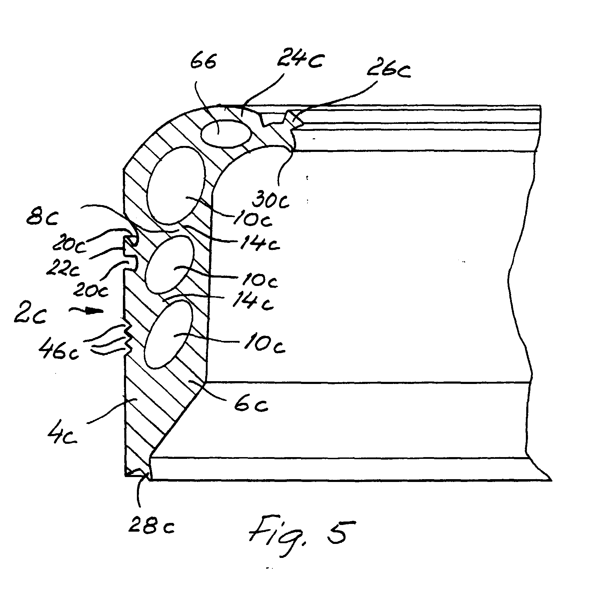

The embodiment of the sealing device 2c according to the invention shown in Fig. 5 differs form the previously described embodiments of the sealing device substantially only in the respect that the inner, radially inwards directed edge portion 24c of the sealing device is provided with a hollow space 64 having elliptic axial section, the main axis of the elliptic hollow space being positioned in the radial plane. For the rest the embodiment according to Fig. 5 is in all essential respects designed in agreement with the embodiment according to Figs. 1 and 2 with the exception that the device for preventing or restricting axial displacement of the parts of the sealing device at the transition between the sealing ring 4c and the mould ring 2c is designed in accordance with Fig. 3. Corresponding parts of the sealing device have the same reference numerals as in the embodiments previously described with the addition of c.

The invention can be modified within the scope of the following claims.

## Claims

1. A sealing device for sealing an annular space between two pipe end portions preferably consisting of concrete, one of the pipe end portions forming a socket (38) having a substantially cylindrical inner surface and the other pipe end portion forming a spigot end (40) axially introducable into the socket and having a substantially cylindrical outer surface, the sealing device comprising a sealing ring (4) having a sealing portion (6) for sealing the annular space and a mould ring (8) connected with the sealing ring and provided with hollow spaces (10; 42; 48), the sealing ring and the mould ring consisting of an elastic material, preferably rubber, and the sealing ring being moulded into the socket at the cylindrical inner surface thereof with the sealing ring positioned adjacent the free end of the socket and the mould ring positioned axially inside the sealing ring, **characterized** in that at least the hollow spaces (10; 42, 48) which are positioned closest to the sealing ring are separated from each other by means of a partition (14; 44; 50; 52, 54) extending axially and radially obliquely inwards into the socket (38).

2. A sealing device as claimed in claim 1, **characterized** in that all hollow spaces (10; 42; 48) formed in the part of the mould ring which is intended to engage the cylindrical outer surface of the spigot end (40) are separated from each other by means of partitions (14; 44; 50, 52, 54) which extend axially and radially obliquely inwards into the socket (38).

3. A sealing device as claimed in claim 1 or 2, **characterized** in that the hollow spaces (10; 48) are of elliptic shape with regard to an axial section through the sealing device with the main axis (12) positioned so that it extends axially and radially obliquely inwards into the socket.

4. A device as claimed in any of claims 1 and 2, **characterized** in that the hollow spaces (42) are of rhomboid shape in respect of an axial section through the sealing device.

5. A sealing device as claimed in any of the preceding claims, **characterized** in that the partitions form in radial direction a continuous portion (16) extending between the radially outer and radially inner surface of the mould ring.

6. A sealing device as claimed in any of the preceding claims, **characterized** in that the sealing device is at its radially outer surface moulded into the socket (38) provided with means (18; 20, 22; 46; 60, 64) for preventing or restricting axial displacement of the sealing device and the parts thereof for example as a consequence of the fact that the sealing device is subjected to a radial compression.

7. A sealing device as claimed in claim 6, **characterized** in that the means (18; 20, 22; 46; 60, 64) for preventing or restricting axial displacement of the sealing device and the parts thereof are positioned at the radially outer surface of the sealing device in connection with the transition between the sealing ring (4) and the mould ring (8) and/or at the radially outer surface of the mould ring (8).

8. A sealing device as claimed in any of claims 6 and 7, **characterized** in that the means for preventing or restricting axial displacement of the sealing device and the parts thereof are constituted by recesses (18; 20; 46; 60) at the radially outer surface of the sealing device, said recesses being filled up with the material constituting the socket.

9. A sealing device as claimed in claim 8, **characterized** in that the recesses have the shape of one or several peripherally extending grooves (18; 20; 46; 60).

10. A sealing device as claims in claim 9, **characterized** in that at least some of the grooves (46; 60) are of triangular cross-section.

11. A sealing device as claimed in claim 9 or 10, **characterized** in that at least some of the groovesdefine in pairs a bead (22; 64) extending peripherally and having a dovetail-shaped cross-section.

12. A sealing device as claimed in any of the preceding claims, **characterized** in that the radially outer surface of the sealing device is at least prior to the moulding into the socket positioned in a cylindrical plane.

13. A sealing device as claimed in any of the preceding claims, **characterized** in that in that the mould ring has at its inner edge portion positioned at a distance from the sealing ring a radially inwards directed portion (24) which at least partially constitutes the annular bottom surface of the socket (38).

14. A sealing device according to claim 13, **characterized** in that the radially inwards directed portion (24) has at its inner edge a retainer portion (26) moulded into the material of the socket.

15. A sealing device as claimed in claim 13 or 14, **characterized** in that one or several hollow spaces (66) are formed in the radially inwards directed portion (24) of the mould ring.

16. A sealing device as claimed in any of the preceding claims, **characterized** in that the sealing ring has at its edge portion positioned closest to the free end of the socket a retainer portion (58) moulded into the material of the socket.
